Europäisches Patentamt

European Patent Office

Office européen des brevets

(11) Veröffentlichungsnummer: **0 096 091**
A1

(12) **EUROPÄISCHE PATENTANMELDUNG**

(21) Anmeldenummer: 82104969.9

(22) Anmeldetag: 07.06.82

(51) Int. Cl.³: **F 16 L 3/00**
B 66 C 13/12, B 23 Q 1/00

(43) Veröffentlichungstag der Anmeldung:
21.12.83 Patentblatt 83/51

(84) Benannte Vertragsstaaten:
BE DE FR GB IT LU NL SE

(71) Anmelder: Peiner Maschinen- und Schraubenwerke AG
Gerhardstrasse 10
D-3150 Peine(DE)

(72) Erfinder: Brendecke, Manfred
Wiesengrund 17
D-3150 Peine(DE)

(72) Erfinder: Werther, Wolfgang
Oststrasse 14 e
D-3300 Braunschweig(DE)

(54) Vorrichtung zur Führung von Versorgungsleitungen.

(57) Es gibt Geräte, z. B. Verstellspreader, bei denen Versorgungsmedien von feststehende auf bewegliche Bauteile übertragen werden. Für derartige Geräte ist zur Führung der Versorgungsleitungen (3) eine Vorrichtung geschaffen, die sich aus einem am feststehenden Bauteil (1) befestigten U-Profil (6), einem am beweglichen Bauteil (2) befestigten U-Profil (7) und einem Federstahlband (9) zusammensetzt, das mit einem Ende am feststehenden Bauteil (1) und mit dem anderen Ende am beweglichen Bauteil (2) befestigt ist. Die Vorrichtung ist besonders einfach, raumsparend und kostengünstig.

Fig. 1

## Vorrichtung zur Führung von Versorgungsleitungen

Die Erfindung betrifft eine Vorrichtung zur Führung von Versorgungsleitungen für den Einsatz bei Geräten, bei denen Versorgungsmedien von feststehenden auf bewegliche Bauteile übertragen werden.

Es ist z.B. bei Verstellspreadern bisher so, daß die hydraulische Energie durch Schläuche übertragen wird, die bei einer notwendigen Spreaderverstellung von einer Trommel abgewickelt oder auf diese wieder aufgewickelt werden müssen. Dies ist nachteilig, weil die Trommel und die darauf aufgewickelten Leitungen verhältnismäßig viel Platz beanspruchen. Darüber hinaus ist es von Nachteil, daß die hydraulische Energie von der Welle zur drehenden Trommel geführt werden muß und daß bei den hierfür erforderlichen Abdichtungen bereits nach kurzer Betriebsdauer Leckagen auftreten. Weiterhin besteht der Drehantrieb der Trommeln meistens aus einer Spiralfeder; mit jedem Aufsetzen des Spreaders auf einen Container ist ein Durchfedern der gespannten Schlauchleitungen verbunden, was weitere, kurze Auf- bzw. Abwickelvorgänge zur Folge hat, wodurch aufgrund dieser insgesamt vielzähligen Federbeanspruchungen häufige Federbrüche eintreten.

Der Erfindung liegt die Aufgabe zugrunde, zur Übertragung von Versorgungsenergien von feststehenden auf bewegliche Bauteile anstelle der aufwendigen und teuren Ausführungen eine wirtschaftliche Lösung zu schaffen.

Diese Aufgabe wird von einer Vorrichtung gelöst, die erfindungsgemäß aus einem am feststehenden Bauteil befestigten U-Profil, einem am beweglichen Bauteil befestigten U-Profil und einem mit einem Ende am feststehenden Bauteil und mit dem anderen Ende am beweglichen Bauteil befestigten, die Längsöffnungen der U-Profile abdeckenden Federstahlband besteht.

Durch die Erfindung ergibt sich eine besonders einfache, raumsparende und kostengünstige Vorrichtung zur Führung von Versorgungsleitungen.

Ein weiterführendes Erfindungsmerkmal besteht darin, daß zwischen den Versorgungsleitungen und dem Federstahlband in ihrem jeweiligen Umlenkungsbereich ein deutlicher Abstand vorhanden ist. Hierdurch wird beim Verschieben des beweglichen Bauteils eine Berührung zwischen dem Federstahlband und den Versorgungsleitungen im Umlenkungsbereich und damit ein Verschleiß zwischen Federstahlband und Leitungen vermieden.

Die Erfindung wird nachfolgend anhand eines in der Zeichnung dargestellten Ausführungsbeispiels näher erläutert.

Es zeigt:

Fig. 1   eine Seitenansicht der Leitungsführung an einem
         Verstellspreader in der eingefahrenen Stellung,

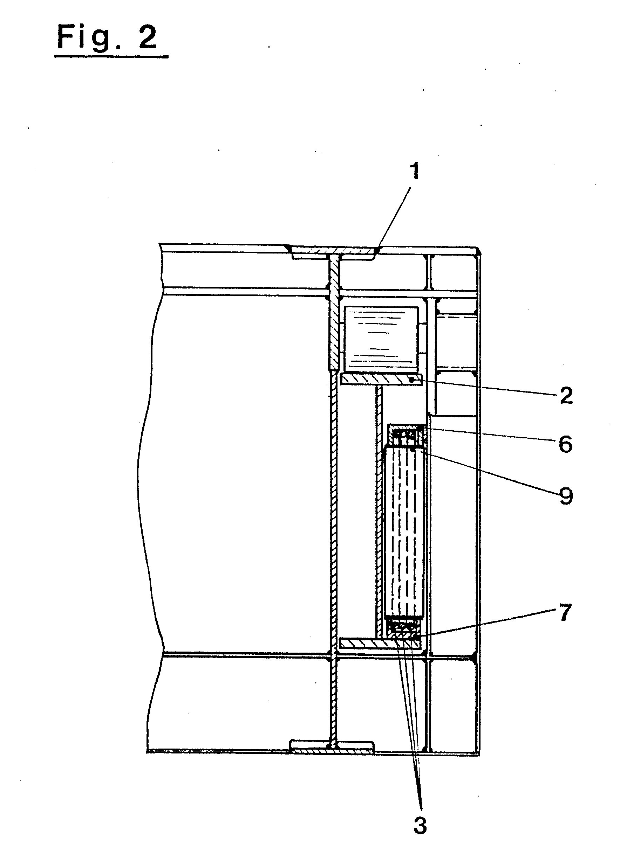

Fig. 2   einen vergrößerten Querschnitt der Leitungsführung gemäß der Figur 1, längs der Linie I - I,

Fig. 3   die Seitenansicht der Leitungsführung gemäß der

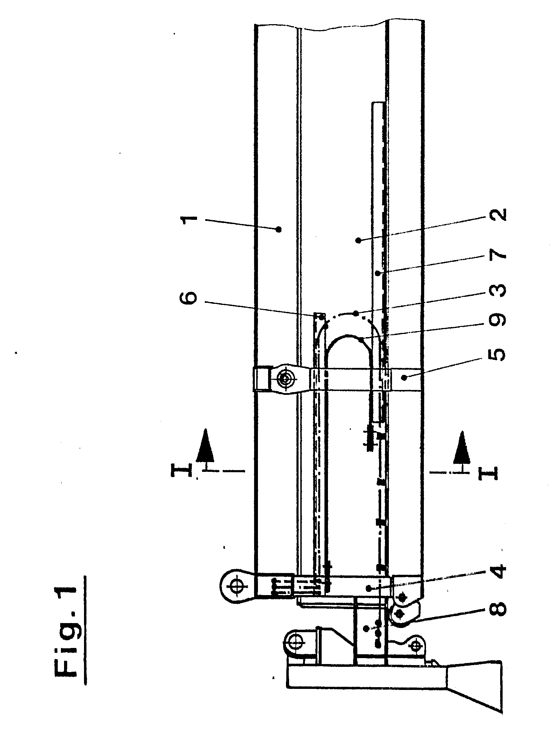

         Figur 1, jedoch in der ausgefahrenen Stellung
         des Verstellspreaders.

Mit 1 ist der feststehende Teil eines Spreaders bezeichnet und mit 2 der bewegliche Teil des Spreaders. Die Energieversorgung der Verbraucher auf dem beweglichen Spreaderteil 2 erfolgt über Leitungen 3, die mit einem Ende an einem Stützrahmen 4 des feststehenden Spreaderteiles 1 befestigt sind. Ebenfalls befestigt ist an dem Stützrahmen 4 und an einem weiteren Stützrahmen 5 ein U-Profil 6, das mit seiner offenen Seite nach unten zeigt. Von ihrem Festpunkt am Stützrahmen 4 ausgehend, liegen die Leitungen 3 nebeneinander in dem U-Profil 6, beschrei-ben dann einen $180^{\circ}$-Bogen und verlaufen anschließend nebeneinander in einem weiteren U-Profil 7, das mit seiner offenen Seite nach oben zeigt und am beweglichen Spreaderteil 2 befestigt ist. Die Leitungen 3 sind mit ihrem anderen Ende an einem Querträger 8 des beweglichen Spreaderteiles 2 befestigt. Von hier aus erfolgt die Verteilung zu den einzelnen Verbrauchern. Um sämtliche Leitungen 3 in den U-Profilen 6 und 7 allseitig zu führen, ist ein Federstahlband 9 vorgesehen, das mit einem Ende am Stützrahmen 4 des feststehenden Spreaderteils 1 und mit dem anderen Ende am beweglichen Spreaderteil 2 befestigt ist. Durch diese Anordnung wird das Federstahlband 9 gezwungen, sich jeweils auf den Stegen der beiden U-Profile 6 und 7 abzulegen. Eine stabile Lage des Federstahlbandes 9 wird durch einen 180°-Bogen verursacht, wobei das Federstahlband das Bestreben hat, sich zu strecken. Um eine Berührung miteinander zu vermeiden, ist zwischen den Versorgungsleitungen 3 und dem Federstahlband 9 in ihrem Umlenkungsbereich ein deutlicher Abstand vorhanden.

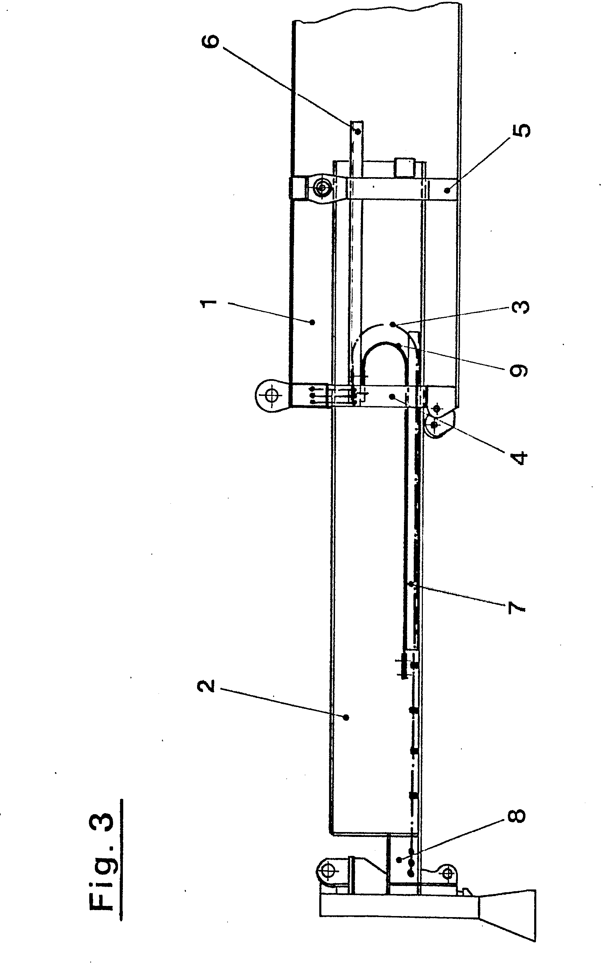

Mit einer in Figur 3 veranschaulichten Verschiebung des beweglichen Spreaderteiles 2 verlassen die Leitungen 3 das obere U-Profil 6, durchlaufen einen 180°-Bogen und legen sich in das untere, sich mitverschiebende U-Profil 7 ab. Eine. etwa gleiche Bewegung erfährt das Federstahlband 9, das sich nach dem Abheben vom oberen U-Profil auf das untere U-Profil 7 legt und somit die Leitungen 3 abdeckt.

Patentansprüche :

1. Vorrichtung zur Führung von Versorgungsleitungen für den Einsatz bei Geräten, bei denen Versorgungsmedien von feststehenden auf bewegliche Bauteile übertragen werden müssen, gekennzeichnet durch ein am feststehenden Bauteil befestigtes U-Profil (6), ein am beweglichen Bauteil befestigtes U-Profil (7) und ein mit einem Ende am feststehenden Bauteil und mit dem anderen Ende am beweglichen Bauteil befestigtes, die Längsöffnungen der U-Profile (6) und (7) abdeckendes Federstahlband (9).

2. Vorrichtung zur Führung von Versorgungsleitungen, dadurch gekennzeichnet, daß zwischen den Versorgungsleitungen (3) und dem Federstahlband (9) in ihrem jeweiligen Umlenkungsbereich ein deutlicher Abstand vorhanden ist.

## Fig. 1

## Fig. 2

0096091

Fig. 3

Europäisches
Patentamt

**EUROPÄISCHER RECHERCHENBERICHT**

Nummer der Anmeldung

EP 82 10 4969

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | ---<br>FR-A-2 279 011 (POCLAIN)<br>* Ansprüche 1-3; Figuren 1,2 * | 1,2 | F 16 L 3/00<br>B 66 C 13/12<br>B 23 Q 1/00 |
| Y | ---<br>CH-A- 346 339 (ATELIERS DE CONSTRUCTIONS MECANIQUES DE VEVEY)<br>* Seite 1, Zeilen 1-27; Figuren 1-3 * | 1,2 | |
| A | ---<br>DE-B-1 145 456 (H.V. ALECANDERSSON et al.)<br>* Spalte 3, Zeile 6 - Spalte 4, Zeile 11; Figur 3 * | 1,2 | |
| A | ---<br>FR-A-2 012 780 (WESTINGHOUSE)<br>* Seite 2, Zeile 24 - Seite 3, Zeile 30; Figuren 1-7 * | 1,2 | |
| A | ---<br>FR-A-1 329 165 (STEMMANN O.H.G.)<br>* Figur 2 * | 1,2 | RECHERCHIERTE SACHGEBIETE (Int. Cl. 3)<br><br>F 16 L<br>B 66 C<br>B 23 Q |
| A | ---<br>US-A-3 885 773 (DUNKELBERGER)<br>* Figuren 2-7 *<br><br>----- | 1 | |

Der vorliegende Recherchenbericht wurde für alle Patentansprüche erstellt.

| Recherchenort | Abschlußdatum der Recherche | Prüfer |
|---|---|---|
| DEN HAAG | 28-01-1983 | ANGIUS P. |